# EUROPEAN PATENT SPECIFICATION

(11) **EP 2 541 391 B1**
(45) Date of publication and mention of the grant of the patent: **08.08.2018**
(21) Application number: 12170780.6
(22) Date of filing: 05.06.2012
(51) Int. Cl.: G06F 3/12

(54) **Pull-print system, print job management method, print server, control method therefor and program**
Pull-Print-System, Druckauftragsverwaltungsverfahren, Druckserver, Steuerverfahren dafür und Programm
Pull-Print système, procédé de gestion de tâche d'impression, serveur d'impression, procédé de contrôle associé et programme

(30) Priority: 29.06.2011 JP 2011144553
(43) Date of publication of application: 02.01.2013
(73) Proprietor: Canon Kabushiki Kaisha, Tokyo 146-8501 (JP)
(72) Inventor: Uchikawa, Shinichi, Tokyo, Tokyo 146-8501 (JP)
(74) Representative: TBK

(56) References cited:
- EP-A2- 1 422 609
- US-A1- 2005 068 566
- US-A1- 2010 208 298

## Description

### BACKGROUND OF THE INVENTION

### Field of the Invention

The present invention relates to a print server, a pull-print system including the print server, a control method for the print server, a print job management method in the pull-print system, and a program. The present invention relates, more particularly, to a technique of synchronizing a print server and a printer with each other in terms of managing pieces of information in a pull-print system.

### Description of the Related Art

In recent years, business development has progressed with the provision of services to the public on the Internet as cloud services. A print server has been required to provide functions as print services on the Internet. Under the circumstances, a cloud pull-print system which allows a printer to acquire print data from a print server via the Internet and pull-prints it is required.

As a technique of pull-printing print data using a print server on the Internet, a pull-print scheme which uses JavaScript® is available. In the pull-print scheme which uses JavaScript, a print server generates a JavaScript program for sending a command to be requested to a printer which prints print data, and transfers it to a Web browser. When the Web browser receives and executes the JavaScript program, it transfers a pull-print request to the printer designated in the JavaScript program, thereby requesting the printer to print the print data. At this time, the print data is designated by, for example, its URL. Note that "Print Service Definition Version 1.0 For Web Services on Devices", [online], January 29, 2007, Microsoft, [Searched on June 22, 2011], Internet <URL:http://msdn.microsoft.com/ja-jp/windows/hardware/gg463146> explains details of a pull-print technique of acquiring print data from its designated URL and printing it.

In a print system including a print server and printer in an intranet, the print server directly communicates with the printer via a network to make it possible to confirm the status of a requested print job and issue a request to register/delete the notification destination of an event that has occurred in the printer.

However, a firewall is located between a printer and a print server deployed on the Internet, such as a cloud service, so the print server cannot directly access the printer via a network. Hence, the pull-print scheme which uses JavaScript can employ a method in which a print server that provides a service by exploiting a cloud service includes in a JavaScript program not only a print request but also a command to transfer a job end notification event. A printer holds the address of a print server, to which a job end notification event is to be transferred, in a memory area as an event notification destination, and transfers a job end notification to the print server, thereby notifying the print server of the status of a print job.

Unfortunately, a job end notification that uses an event is often insufficient to allow the print server to grasp the job status. For example, the printer notifies the print server of a job end event only when a print job is complete. Note that if the printer is rebooted before the job is completed when the event has been registered, an event notification which is held in a volatile memory and is to be sent to the print server is cleared. As a result, the rebooted printer cannot transfer the information of the job status to the print server. In such a case, the print server cannot examine the cause of a failure in transfer of an end notification of a job requested to be executed by the printer to determine whether the printer does not complete the job or cannot transfer the event due, for example, to its reboot. When this happens, the print server cannot grasp the status of the requested print job in the printer requested to print this print job, and therefore continues to manage this print job.

Another problem is posed. After an event is registered in the printer, when an event notification becomes unnecessary, it is necessary to issue an event delete request to the printer so as to delete the event information registered in the printer. However, as described above, a print server deployed on the Internet, such as a cloud service, cannot directly issue an event delete request to a printer protected by a firewall. Hence, in the pull-print scheme which uses JavaScript, it is possible to exploit processing during printing to notify the printer of an event delete request via a Web browser operated by the print operator, thereby issuing the event delete request from the print service on the cloud to the printer.

Unfortunately, this event delete request method poses a problem. In printing, a client which issues a print request can transfer the print request by connecting itself to the print server using the Web browser. However, it is not guaranteed that the client having transferred the print request will be able to connect itself to the print server using the Web browser again after completion of printing.

This indicates that when the client cuts off connection to the print server upon issuance of a print request alone, the print server cannot issue a request to the printer via the client, so the event notification destination registered in the printer cannot be deleted. Unless the event registered in the printer is deleted, the printer continues to transfer the event to the registered event transfer destination or hold the unwanted event transfer destination information. As a result, the number of events registered in the printer reaches an upper limit, and other print operators cannot register new events in the printer.

To solve this problem that the printer continues to transfer an event to an inappropriate destination, Japanese patent Laid-Open No. 2007-257481 describes a technique in which when an error response is sent back as a result of event transfer, a print device deletes from the destination list the event transfer destination from which the error response is sent back. However, if a response indicating that event transfer has succeeded is sent back from the event transfer destination, the print device does not delete this event transfer destination, so the print device continues to distribute events to the same destination a plurality of times. Accordingly, when no error occurs for the event, the print device continues to hold the event notification destination.

In the document US 2010/0208298 A1, there is disclosed an image forming apparatus which includes a receiving unit configured to receive an instruction from a client terminal, an acquisition unit configured to acquire print data from a server based on information about print data included in the instruction received by the receiving unit, a print unit configured to perform printing of the acquired print data, and a first transmission unit configured to create, if an error has occurred when the print unit performs printing, substitute printing information indicating an image forming apparatus to be a candidate for substituting printing, based on identification information for identifying the apparatus, which is included in the received instruction, and to transmit the substitute printing information to the client terminal.

In the document EP 1 422 609 A2, there is disclosed a technique of local printing of a document from a remote server application through a client proxy. In a method for printing at a local printer using the resources of a networked remote application server in which the networked remote application server responds to a print executable request from a local client by downloading a print proxy executable that obtains printing parameters, upon receipt of printing parameters from the print proxy executable, the networked remote application server generates a printer-dependent data stream and downloads the data stream to the print proxy executable running on the local client, and the print proxy executable then uses local printer utilities to execute the print job.

### SUMMARY OF THE INVENTION

The present invention in its first aspect provides a print server, as specified in claim 1.

The present invention in its second aspect provides a pull-print system, as specified in claims 2 to 9.

The present invention in its third aspect provides a control method for a print server, as specified in claim 10.

The present invention in its fourth aspect provides a print job management method in a pull-print system, as specified in claim 11.

The present invention in its fifth aspect provides a program, as specified in claim 12.

In a pull-print system under the environment in which a print server cannot directly communicate with a printer, it is possible to prevent wasteful processing and a mismatch between the print server and the printer in terms of managing an object to be managed, such as a print job.

Further features of the present invention will become apparent from the following description of exemplary embodiments with reference to the attached drawings.

### BRIEF DESCRIPTION OF THE DRAWINGS

Fig. 1 is a block diagram showing the entire configuration of a print system;
Fig. 2 is a block diagram showing the hardware configuration of the print system;
Fig. 3 is a block diagram showing the service configuration of the print system;
Figs. 4A and 4B are block diagrams showing the software configuration of the print system;
Fig. 5 is a sequence chart of the print system;
Fig. 6 is a flowchart of print request reception in a print server;
Fig. 7 is a flowchart of polling registration in a printer;
Fig. 8 is a flowchart of polling processing in the printer;
Fig. 9 is a flowchart of polling reception in the print server;
Fig. 10 is a flowchart of polling management in the print server;
Fig. 11 is a table illustrating an example of the configuration of a printer list managed by the print server;
Fig. 12 is a table illustrating an example of the configuration of a print job list managed by the print server;
Fig. 13 is a table illustrating an example of the configuration of a print history managed by the print server;
Fig. 14 is a view illustrating an example of a description of a polling registration request;
Fig. 15 is a view illustrating an example of a description of a polling registration response;
Fig. 16 is a view illustrating an example of a description of a polling request;
Fig. 17 is a view illustrating an example of a description of a polling response;
Fig. 18 is a table illustrating an example of the configuration of a polling list managed by the printer; and
Fig. 19 is a flowchart of event reception processing in the print server.

### DESCRIPTION OF THE EMBODIMENTS

Modes for carrying out the present invention will be described below with reference to the accompanying drawings.

### [System Configuration]

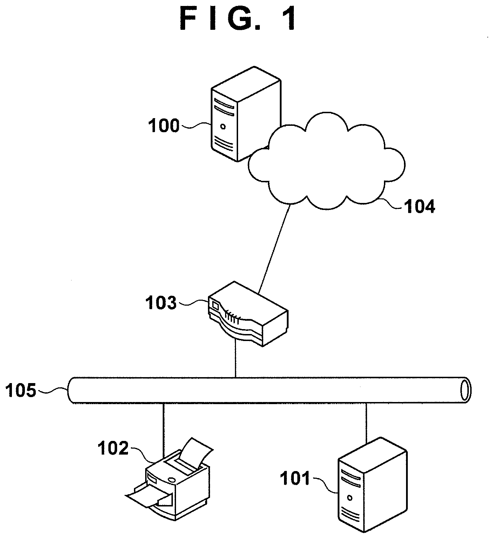

Fig. 1 is a block diagram showing the entire configuration of a print system according to this embodiment. Referring to Fig. 1, a client terminal 101, a print server 100, and a printer 102 are connected to each other via networks 104 and 105. A router 103 serves to connect the network 104 as an external network to the network 105 as an internal network. Although not shown in Fig. 1, a firewall is located between the networks 104 and 105, so their communication is limited due, for example, to security concerns. In this embodiment, various devices positioned on the network 104 cannot spontaneously connect themselves to devices present on the network 105, unless otherwise specified. An example of the network 104 is the Internet. Also, an example of the network 105 is a LAN (Local Area Network).

Although appropriate examples of the client terminal 101 include a desktop personal computer, notebook personal computer, mobile personal computer, and PDA (Personal Data Assistant), the client terminal 101 may be a mobile phone having a program execution environment installed on it. The environment in which a program for activating a Web browser (not shown) used in this embodiment is executed is installed on the client terminal 101.

When the client terminal 101 causes the printer 102 to print a document on the print server 100, the print server 100 receives a print request transferred from the Web browser on the client terminal 101.

The print server 100 generates a JavaScript program for implementing a print request, and transfers it to the Web browser on the client terminal 101. When the Web browser on the client terminal 101 receives and executes the JavaScript program, it transfers a pull-print request to a printer which prints document data. The printer 102 acquires the document data to be printed from the print server 100 and prints it, in accordance with the pull-print request received from the client terminal 101. Although JavaScript is employed as a script language to be executed by the Web browser installed on the client terminal 101 in the present invention, the script language is not limited to this. Other languages may be employed as long as they are script languages which can be executed by the Web browser.

### [Hardware Configuration]

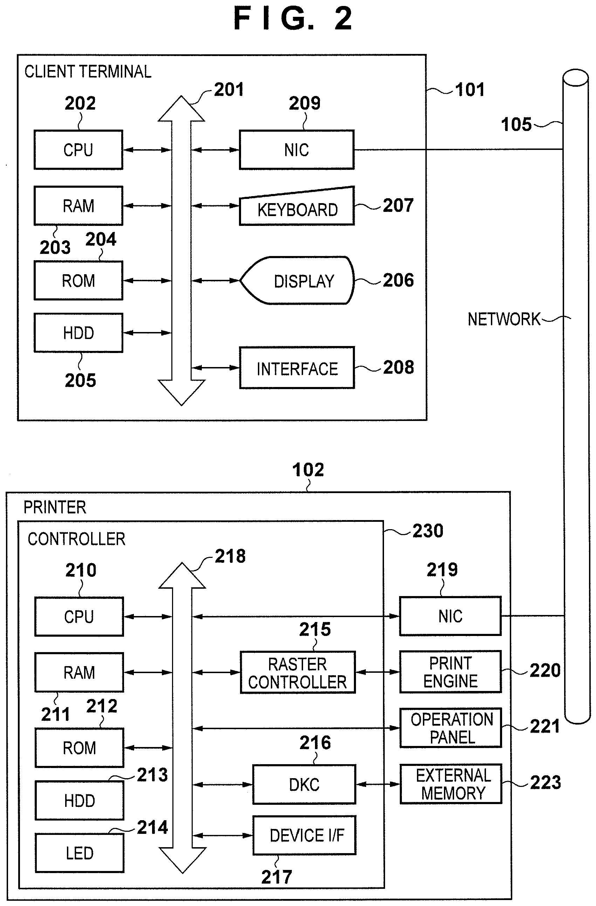

Fig. 2 is a block diagram showing the hardware configuration of the client terminal 101, print server 100, and printer 102 in the print system according to this embodiment. Note that in this embodiment, the print server 100 and client terminal 101 have the same configuration, and the client terminal 101 will be taken as an example herein.

The configuration of the client terminal 101 will be described first. Referring to Fig. 2, a CPU 202 controls the overall apparatus. The CPU 202 also controls to execute, for example, application programs and an OS stored in a storage means such as a hard disk (HDD) 205, and temporarily store, for example, information and files necessary to execute the programs in, for example, a RAM 203. A ROM 204 functions as a storage means and stores programs such as a basic I/O program and various types of data such as printer information and print data used in print processing. The RAM 203 functions as a temporary storage means, that is, functions as, for example, the main memory and work area of the CPU 202. The HDD 205 is one of external storage means and functions as a mass memory. Also, the HDD 205 stores, for example, application programs such as a Web browser, a print server program, an OS, and related programs.

A display 206 is a display means for displaying, for example, a command input from a keyboard 207 and the status of the printer 102. An external device I/F 208 serves to connect a USB device and a peripheral device to the print system. The keyboard 207 is an instruction input means for allowing the user to input an instruction. A system bus 201 controls the data flow in the print server 100 of the print system. A network interface card (NIC) 219 exchanges data with an external device via an NIC 209 or various networks. Note that the configuration of the above-mentioned computer merely provides an example, and is not limited to the configuration example shown in Fig. 2. The storage destination of data or programs can be changed to, for example, a ROM, a RAM, or an HDD in accordance with their features.

An example of the configuration of the printer 102 will be described next. A controller 230 controls a control system for the printer 102. A CPU 210 controls the overall apparatus, that is, systematically controls access to various devices connected to a system bus 218. This control is done based on, for example, a control program stored in a ROM 212, or resource data (resource information) or a control program stored in an external memory 223 connected via a disk controller (DKC) 216. A RAM 211 functions as, for example, the main memory and work area of the CPU 210, and is configured to increase the memory capacity using an option RAM connected to an add-in port (not shown). An HDD 213 is an external storage means which functions as a mass memory, and stores, for example, a pull-print application program and related programs.

A user interface and pull-print switch button for a pull-print operation are located on an operation panel (operation unit) 221. Buttons and a display unit such as a liquid crystal panel or an LED 214 for operations such as setting of, for example, the operation mode of the printer 102, display of the operating status of the printer 102, and copy designation of the printer 102 are also located on the operation panel 221. The network interface card (NIC) 219 exchanges data with an external device via various networks.

Note that a print engine 220 shown in Fig. 2 employs a known print technique such as electrophotographic printing (laser beam printing), inkjet printing, or dye sublimation (thermal transfer) printing as an exemplary embodiment of this technique. However, the present invention is not limited to these print techniques. A raster controller 215 converts print data in the PDL/PDF format into image data. A device I/F 217 is a connection I/F which connects an external device that can be connected via, for example, a USB connector. Also, although not shown in Fig. 2, each device includes an internal part which acquires time, and can be notified of the time, at which a request issued from each processing unit is received, in response to a request from each processing unit.

### [Module Configuration]

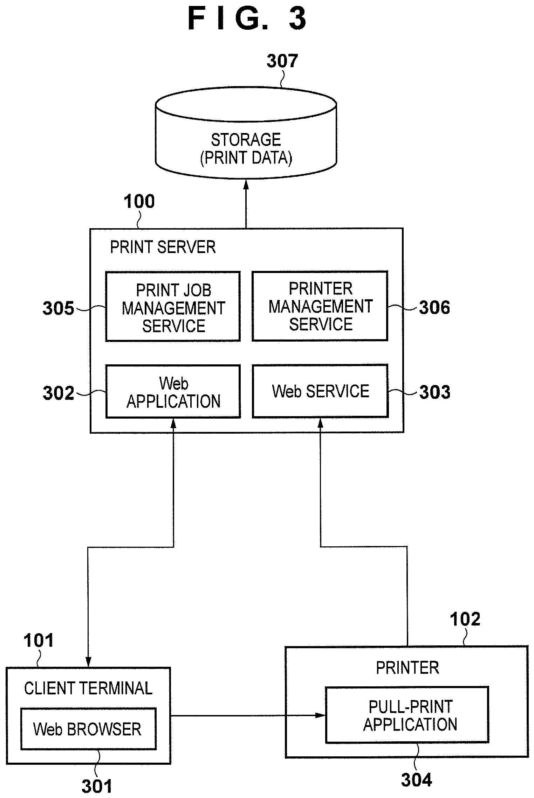

Fig. 3 is a configuration block diagram showing the relationships among modules provided in the print system according to this embodiment.

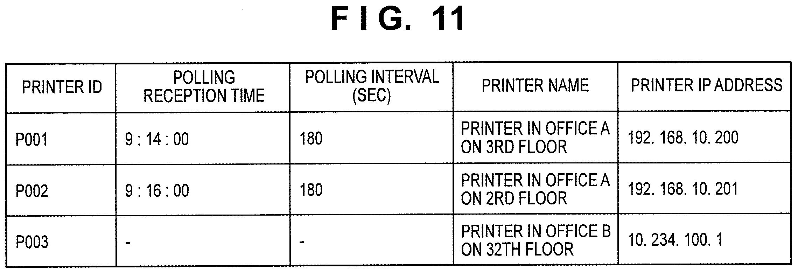

The print server 100 provides a printer management service 306. The printer management service 306 holds the information of each printer which prints. The printer management service 306 holds a printer list, as shown in Fig. 11. The printer list includes the printer ID, printer name information, and printer IP address information for uniquely identifying the printer 102 by the print server 100. In addition to these pieces of information, the printer list registers the time at which polling is received as the status of a polling notification requested to be sent by the printer 102, and the polling interval time. Note that the printer list is not limited to this, and may include other printer information. For example, the printer IP address may include the global address and private address, and the printer list may also include information indicating a network which includes each printer.

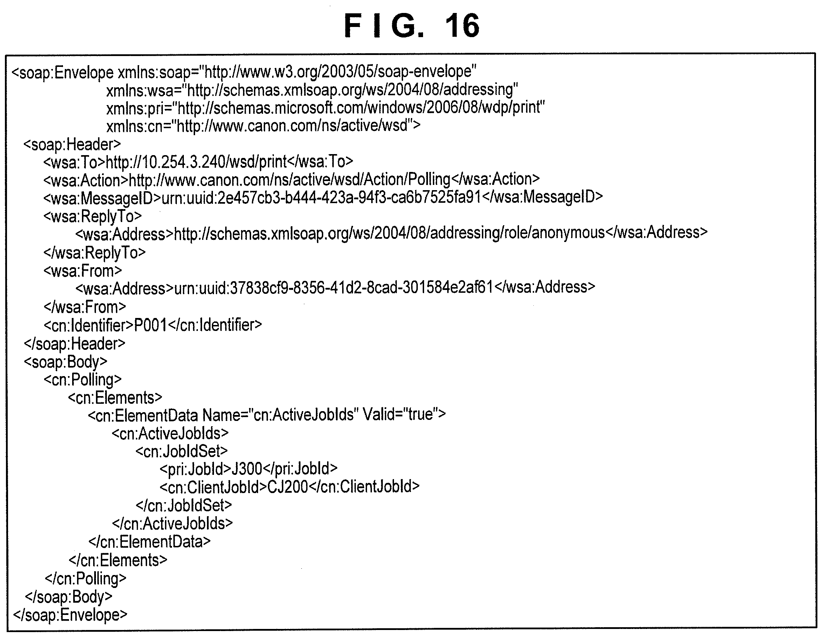

The printer ID is an ID (identifier) for uniquely identifying the printer 102 in the print server 100. In this embodiment, a polling notification means that generated as the printer 102 communicates with the print server 100 so as to transfer the processing status of a print job to the print server 100 at a predetermined time interval. In this embodiment, in response to this polling notification, the printer 102 transfers data (Fig. 16) including a processing-in-progress job list (processing-in-progress job list) to the print server 100. A practical example of the data transferred at this time will be described later with reference to Fig. 16.

As the status of a polling notification, the print server 100 holds the time (polling reception time) at which polling is previously received from each printer, as shown in Fig. 11. Note that at the first polling time, the printer 102 normally completes its polling registration. The polling interval is the interval time of a polling notification designated by the printer 102. When a polling notification is periodically sent, polling is performed at the interval designated in this information.

Also, it is confirmed whether periodical polling is received from the printer 102, based on the pieces of information registered in the printer list. For example, as indicated by printer ID "P003" shown in Fig. 11, the pieces of information of the polling reception time and polling interval time are not set in a printer which does not transfer a polling notification.

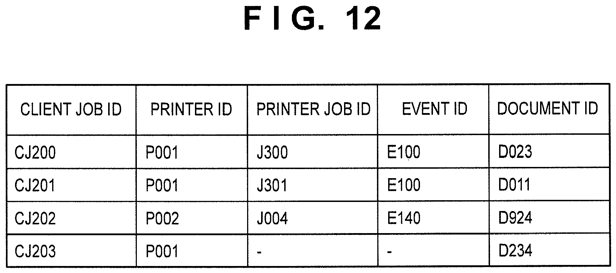

A print job management service 305 manages a print job requested by the user, and holds and manages, for example, document data in a storage 307 as print data. Also, the print job management service 305 holds a print job list, as shown in Fig. 12, to manage a print job requested to be executed by the printer 102.

The client job ID is an ID (Identifier) for uniquely identifying each print job in the print server 100. The printer ID corresponds to the "Printer ID" defined in the printer list shown in Fig. 11, and is information for uniquely identifying each printer requested to execute a print job. The printer job ID is issued to a print job by a printer requested to execute the print job. When the print server 100 exchanges the information of a print job with the printer 102, it identifies the print job using a printer job ID issued by the printer 102. The document ID is information for uniquely identifying each document held in the storage 307 within the print server 100 to distinguish a printed document.

The storage 307 is a storage device such as an HDD built into an information processing apparatus of the print server 100, an externally connected HDD, or a network storage. Document data designated to be printed in a print job is held in the storage 307. The storage is implemented as, for example, the HDD 205.

A Web application 302 generates a Web page which can be displayed on a Web browser 301 running on the client terminal 101. The Web application 302 makes a response to a request from the Web browser 301 on the client terminal 101, and sends back the generated Web page. Also, the Web application 302 generates a JavaScript program for causing the Web browser 301 on the client terminal 101 to transfer a request to the printer 102, and transfers it to the Web browser 301.

A Web service 303 is a module which communicates with the printer 102. In this embodiment, the Web service 303 communicates with the printer 102 so that the printer 102 transfers, for example, a print data acquisition request, a polling notification, and an event notification. In response to these requests transferred from the printer 102, the Web service 303 performs processing complying with each request. The Web service 303 sends back a response to the printer 102 as a processing result.

Note that the print job management service 305, Web application 302, and Web service 303 are independent programs. Although one print server 100 implements the functions of these modules in this embodiment, these modules can also be located in separate information processing apparatuses. This indicates that these modules are located in information processing apparatuses connected to each other via a network, and communicate with each other.

A pull-print application 304 on the printer 102 causes the printer 102 to pull-print. The pull-print application 304 has a pull-print function of acquiring print data from its URL upon being notified of this URL in response to a print job execute request, and printing it. The pull-print application 304 also has a polling function of transferring a processing-in-progress job list to the registered polling notification destination at a predetermined time interval, and a function of sending an event notification when a job printed by each printer is complete. The notification destination at this time is the print server 100.

The Web browser 301 on the client terminal 101 can execute the JavaScript program transferred from the print server 100.

### [Software Configuration]

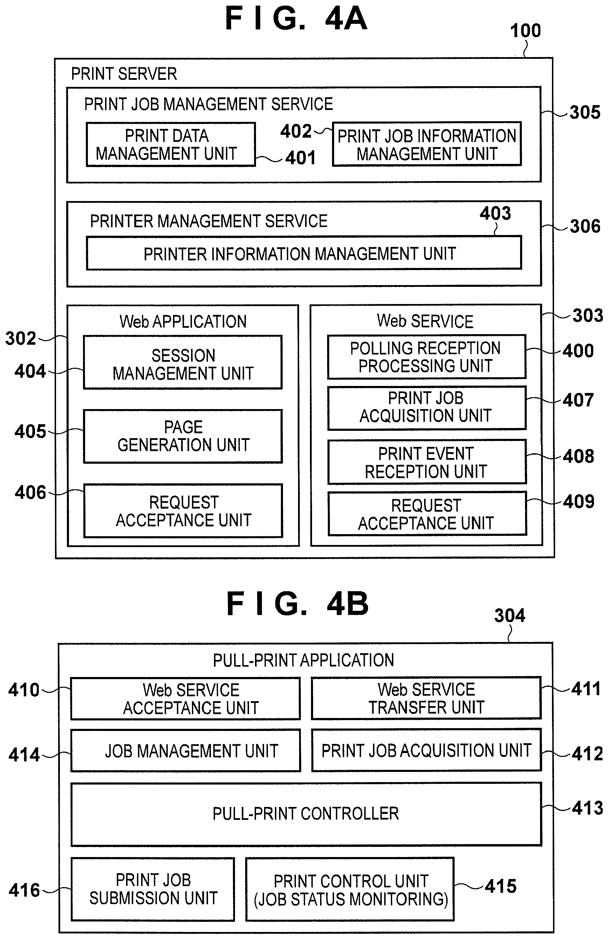

Figs. 4A and 4B are block diagrams showing the more detailed software configuration of each module shown in Fig. 3 in the print system according to this embodiment. The configuration of the print server 100 will be described first with reference to Fig. 4A. A print data management unit 401 of the print job management service 305 installed on the print server 100 manages print data (document data). The management of print data indicates herein the operation in which the print data management unit 401 acquires designated print data from the storage 307 in response to a print data acquisition request from the Web service 303, and transfers the print data to the Web service 303. Also, the print data management unit 401 adds or deletes print data as needed.

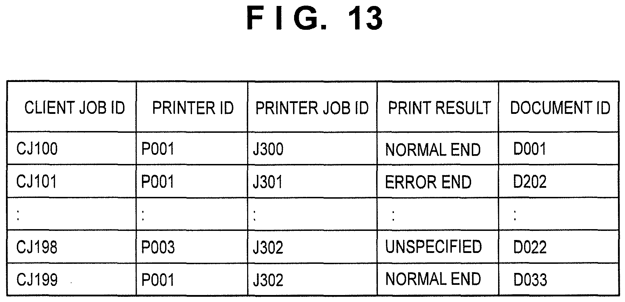

A print job information management unit 402 manages print job information and print history information requested by the client via the client terminal 101. The print job information managed herein is a print job list shown in Fig. 12, and includes ID information for uniquely identifying each print job, and information for specifying a printer which outputs this print job. Also, the print history information is print history information shown in Fig. 13, and includes ID information for identifying each job, and print result information for this job. In this embodiment, the print result information included in the print history information includes "Normal End", "Error (End)", and "Unspecified" statuses as the statuses of print jobs.

The "Error (End)" status is set for a print job which is instructed to be executed by a printer but has become incapable of being monitored. This indicates that the "Error (End)" status is set for a print job ended by a printer before the printer sends a normal end notification. The "Unspecified" status is set for a print job which is instructed to be executed by a printer from which a polling notification has become incapable of being received. Setting of the history information based on a polling notification will be described later with reference to each processing sequence. Note that the configurations of the print job list and print history information are not limited to those shown in Figs. 12 and 13, respectively, and may include additional information.

A printer information management unit 403 of the printer management service 306 manages the printer list shown in Fig. 11. Also, the printer information management unit 403 periodically confirms the polling status of each printer registered in the printer list to determine whether no problem is posed in a job being printed by this printer. An example of the confirmation at this time is confirmation as to whether a time corresponding to the polling interval has not elapsed from the polling reception time.

A request acceptance unit 406 of the Web application 302 is a module which accepts, for example, a print request from the Web browser 301 on the client terminal 101. A session management unit 404 manages the request from the Web browser 301 as a session. A page generation unit 405 generates a Web screen in response to the request from the Web browser 301, and sends back the generated Web screen to the Web browser 301. Note that in some cases, the page generation unit 405 not only transfers a Web screen but also generates using JavaScript a request to be transferred to the printer 102, and sends it back to the Web browser 301.

A request acceptance unit 409 of the Web service 303 is a module which receives a print job acquisition request, a print job status notification event, and a polling notification event from the pull-print application 304 on the printer 102. When the request acceptance unit 409 receives the print job acquisition request, a print job acquisition unit 407 issues a print data acquisition request to the print job management service 305 to acquire designated print data, and transfers it to the client terminal 101.

A print event reception unit 408 is a module which receives the status information of a job having undergone print processing from the printer 102. When the print event reception unit 408 receives an event of completion of print processing for a job from the printer 102, it deletes this job from the print job list shown in Fig. 12. The print event reception unit 408 registers this job in the print history information shown in Fig. 13, together with its designated final status information (print result).

A polling reception processing unit 400 is a module which determines the validity of the print job list held in the print job information management unit 402, based on processing-in-progress job list information periodically transferred from the printer 102. The polling reception processing unit 400 compares the pieces of information of the received processing-in-progress job list and the held print job list (Fig. 12) with each other, and synchronizes the printer 102 and the print server 100 with each other in terms of managing these pieces of information so as to compensate for their differences. How to synchronize the printer 102 and the print server 100 with each other in terms of managing the printing-in-progress jobs at this time will be described later.

The configuration of the printer 102 will be described next with reference to Fig. 4B. A Web service acceptance unit 410 of the pull-print application 304 accepts, for example, a print request, event registration, and polling registration from the Web browser 301 on the client terminal 101. A Web service transfer unit 411 sends, for example, a print job acquisition request, a print job status change event notification, and a polling notification for periodically transferring a processing-in-progress job list to the Web service 303 of the print server 100.

A print job acquisition unit 412 acquires print data from the Web service 303 of the print server 100 via the Web service transfer unit 411 according to its URL received in response to a pull-print request. The print job acquisition unit 412 transfers the acquired print data to a print job submission unit 416. The print job submission unit 416 transfers print data to the controller 230. As a result, the controller 230 executes print processing using the received print data.

A print control unit 415 receives the status of a print job from the controller 230, and notifies a job management unit 414 of this information. The job management unit 414 determines whether the notified status of the print job coincides with the event transfer conditions. If the notified status of the print job coincides with the event transfer conditions, the job management unit 414 sends an event notification via the Web service transfer unit 411.

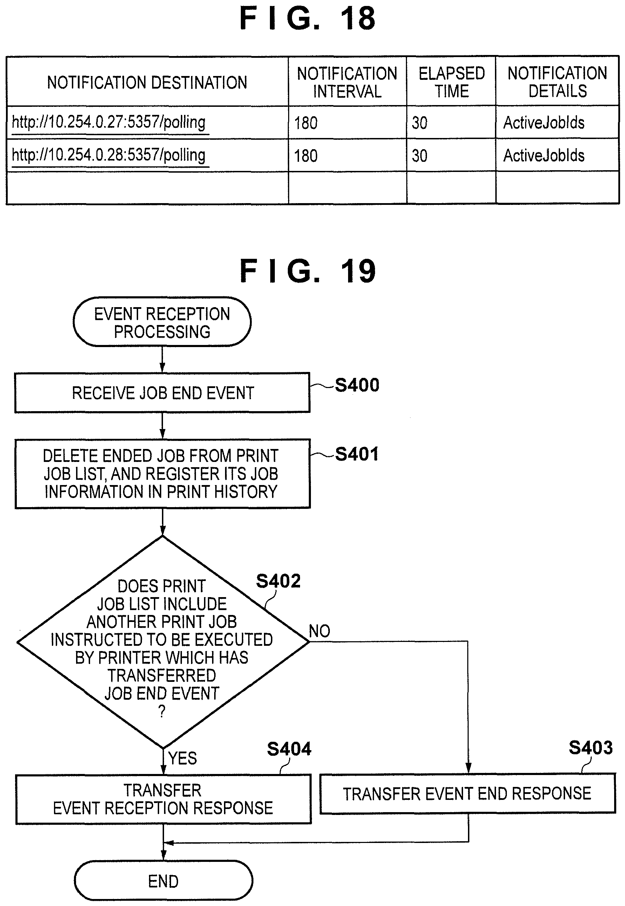

Also, in response to a polling notify instruction from the client terminal 101, the job management unit 414 sends a polling notification in which the destination designated by the polling notify instruction is periodically notified of the processing-in-progress job list. The job management unit 414 includes a polling monitoring list, as shown in Fig. 18, in association with a polling notification to manage each notification destination, the interval at which a polling notification is transferred to this notification destination, and the details of this polling notification. Note that ActiveJobIds designated in the notification details indicates that the pieces of information of print jobs managed at the destination of the polling notification among print jobs being printed by each printer are to be transferred in the form of a processing-in-progress job list. The printing-in-progress job list includes, for example, the client job ID and printer job ID shown in Fig. 12 so that the print server 100 can identify each job. A pull-print controller 413 manages the operation of the overall pull-print application 304. An operation instruction, for example, is issued to each unit via the pull-print controller 413.

### [Processing Sequence]

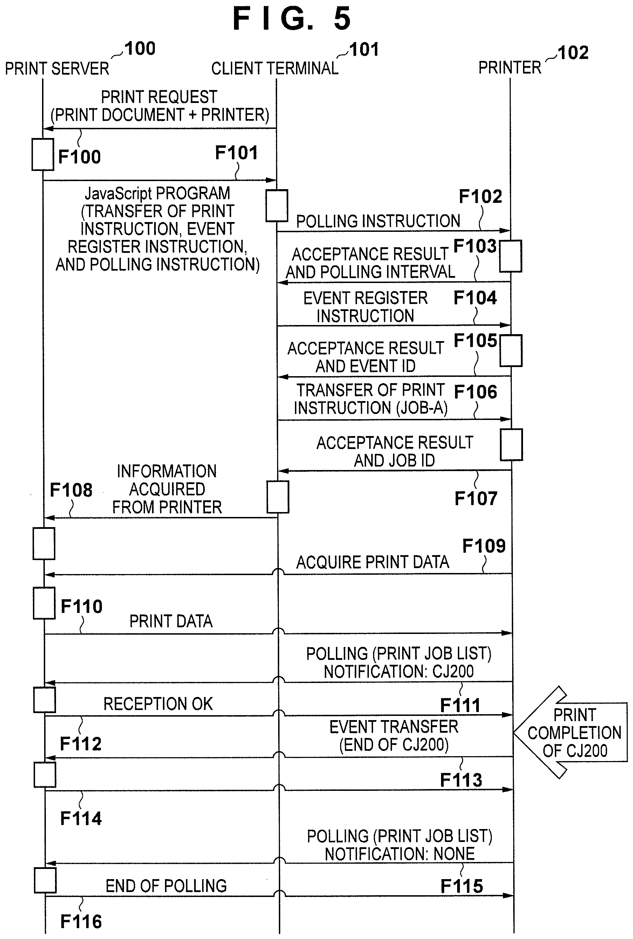

A pull-print scheme which uses JavaScript according to the present invention will be described next with reference to Fig. 5. In the present invention, to precisely grasp the status of a job being printed by each printer, not only a job completion event but also a polling request is issued in sending a print request. A print sequence according to this embodiment will be described hereinafter.

The client terminal 101 connects itself to the Web application 302 on the print server 100 using the Web browser 301, thereby designating a document to be printed and a printer which outputs the printed document, and instructing to print the document (F100). Print settings, for example, can be designated at this time, but are not directly related to the present invention, so a description thereof will not be given.

When the Web application 302 on the print server 100 receives a print request from the client terminal 101, it causes the page generation unit 405 to generate a JavaScript program for causing the client terminal 101 to transfer a request to a printer which prints a document. The JavaScript program generated at this time includes a description according to which the Web browser 301 on the client terminal 101 requests the printer 102 to execute the following types of processing:
a polling instruction (a request to execute a polling notification) for notifying the print server of a processing-in-progress print job list,
a print job event register instruction (a request to execute a job end notification), and
a pull-print instruction (print instruction (including a request to execute a print data acquisition request)).

The print server 100 transfers the generated JavaScript program to the Web browser 301 on the client terminal 101 in response to the print request (F101).

The Web browser 301 on the client terminal 101 receives and executes the JavaScript program transferred from the print server 100. The JavaScript program received at this time describes various types of processing for executing various requests mentioned above. The Web browser 301 sequentially executes these types of processing so that the client terminal 101 communicates with the printer 102 and receives the processing results (F102 - F107).

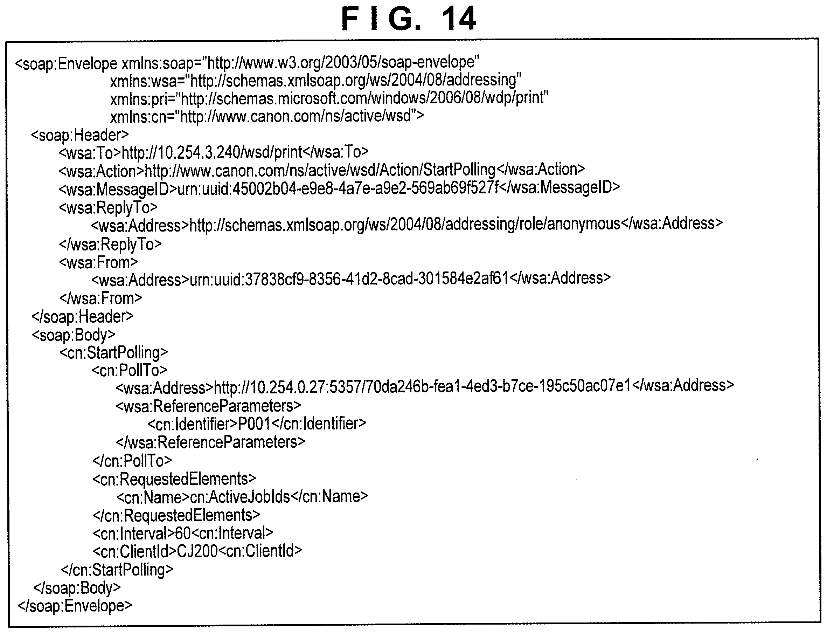

A request for a polling instruction (F102) transferred from the Web browser 301 on the client terminal 101 to the printer 102 is a request as shown in, for example, Fig. 14. Details of the request shown in Fig. 14 will be described below. First, a destination is designated in an Address element subordinate to a PollTo element. Further, a polling notification is executed at a time interval (designated in units of sec in this case) designated in an Interval element. At this time, JOB information (notification details) designated in a Name element is sent by polling as the information of a job issued by a client designated in a ClientId element. In the example shown in Fig. 14, the print instructor transfers processing-in-progress job list (ActiveJobIds) CJ200 to the notification destination "http://10.254.0.27:5357/70da246b-feal-4ed3-b7ce-195c50ac07e1" at an interval of 60 sec.

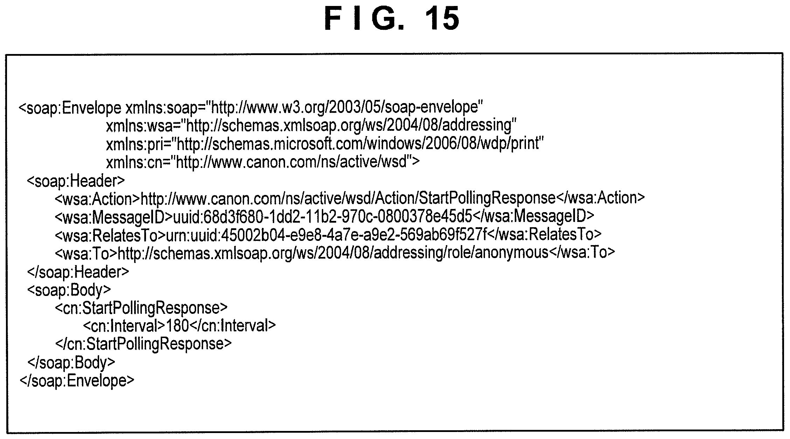

A response to the polling instruction (F103) transferred from the printer 102 to the client terminal 101 is as shown in, for example, Fig. 15. Details of the response shown in Fig. 15 will be described below. Note that Fig. 15 shows that a polling instruction is accepted by the printer 102. However, while "60 (sec)" is designated as a polling interval by the Web browser 301 (an Interval element shown in Fig. 14), "180 (sec)" is designated as a polling interval by the printer 102 (an interval element shown in Fig. 15) in response to the polling instruction. The polling interval may be determined mainly by the printer in accordance with the settings and status of the printer 102. The client terminal 101 notifies the print server 100 of the information determined by the printer 102.

The Web browser 301 on the client terminal 101 issues an event register instruction to the printer 102 (F104). In this case, upon completion of execution of the print job accepted by the printer 102 in response to the print instruction, the Web browser 301 instructs the print server 100 to notify the printer 102 to that effect. When the event can be registered in response to the event register instruction from the Web browser 301, the printer 102 notifies the client terminal 101 of the registered information (event ID), together with information indicating that this request is accepted (F105).

The Web browser 301 on the client terminal 101 issues a pull-print request to the printer 102. The printer 102 notifies the client terminal 101 of a job ID issued in response to the received pull-print request, together with information indicating that this request is accepted.

When the client terminal 101 receives the polling instruction result (F103), event register instruction result (F105), and print instruction result (F107), it transfers to the print server 100 the received processing results and the ID information sent from the printer 102 (F108). Note that if any of the instructions has failed, the printer 102 notifies the print server 100 to that effect.

After the acceptance of each instruction is normally completed, the printer 102 acquires print data from its URL designated in the pull-print request in response to the print instruction (F106) (F109 & F110), and executes print processing.

The printer 102 periodically notifies the print server 100 of a processing-in-progress job list as a polling notification at each polling interval time designated in F103 (Fill). When, for example, the polling interval time has elapsed under the situation in which the pull-print operation requested in F106 is incomplete, the printer 102 transfers information including the processing-in-progress job information received in F106 to the print server 100 (F108).

Even when the polling interval time comes after a pull-print operation in response to the pull-print request accepted in F106 is completed, no processing-in-progress print job is present, so the printer 102 notifies the print server 100 of information indicating that no processing-in-progress job information is present (F115).

Each of the polling notifications (Fill & F115) sent from the printer 102 is request data having a configuration as shown in, for example, Fig. 16. In this case, pieces of Job information equal in number to processing-in-progress Jobs are described as a JobIdSet element subordinate to an ActiveJobIds element. In the example shown in Fig. 16, the print server 100 is notified of information indicating that a job having printer job ID "J300" and client job ID "CJ200" is present. These pieces of information correspond to the printer job ID and client job ID, respectively, of the print job list (Fig. 12) managed by the print job management service 305 of the print server 100. As in F115, if no processing-in-progress job is present, a request generated in consideration of the absence of JobIdSet information is transferred.

When the print server 100 receives the polling notification from the printer 102, it determines whether the printer 102 is to continue its polling. If it is determined that the printer 102 is to continue its polling, the print server 100 instructs the printer 102 to continue its polling notification in response to the polling of the printer 102 (F112); otherwise, the print server 100 instructs the printer 102 to end its polling notification (F116).

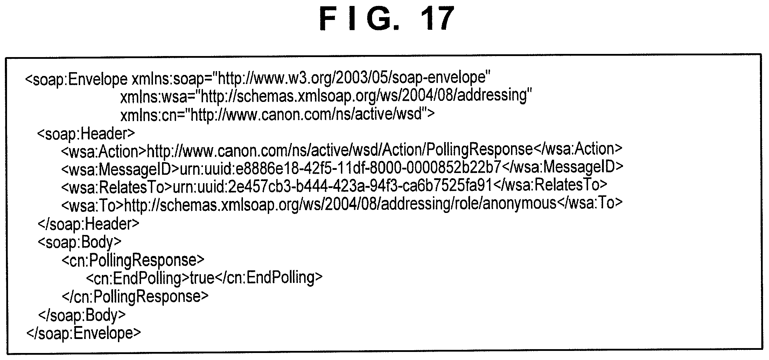

The data obtained by communication (F112 & F116) in response to the polling of the printer 102 is response data having a configuration as shown in, for example, Fig. 17. The polling response includes an instruction as to whether the printer 102 is to continue its polling from the print server 100, as described earlier. As shown in Fig. 17, a polling end instruction is issued if "true" is set in an EndPolling element, or a polling continue instruction is issued if "false" is set in the EndPolling element.

### [Print Request Registration Processing]

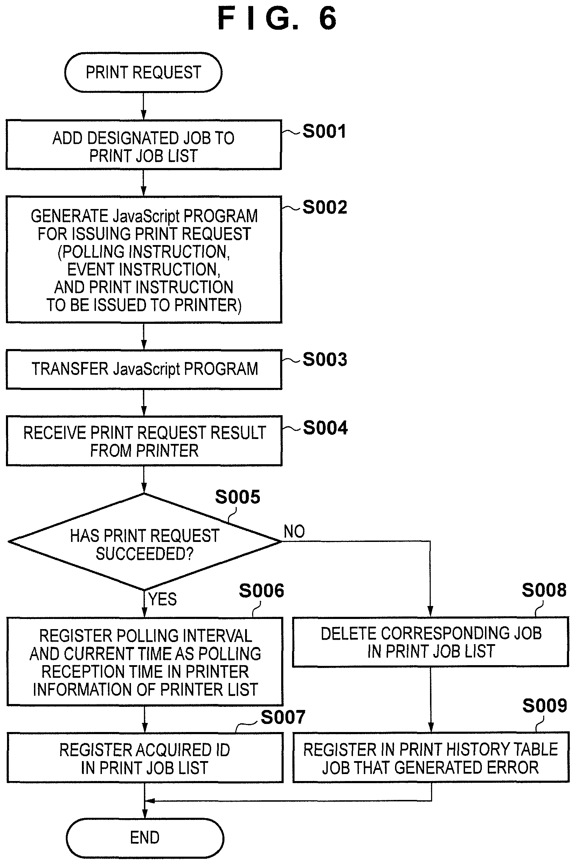

Fig. 6 is a flowchart of the Web application 302 operated by the CPU 202 in accordance with a program stored in the ROM 204 when the print server 100 receives a print request (F100) from the client terminal 101.

When the print server 100 receives the print request, it registers, in the print job list shown in Fig. 12, the document ID and the printer ID of a printer which outputs the job designated by the client terminal 101. The print server 100 acquires the client job ID of the client terminal 101 having issued the print request (step S001).

The print server 100 generates a JavaScript program which describes a request to be sent from the client terminal 101 to the printer 102 and serves to issue this request (step S002). This JavaScript program describes the following types of processing to be executed by the printer under the control of the client terminal:
a polling instruction to periodically notify the print server of a processing-in-progress job list,
an instruction to notify the print server of the end of a job instructed to be executed by the print server, and
an instruction to pull-print (print) data on the print server.

These types of processing described in this JavaScript program correspond to instructions in F102, F104, and F106, respectively, shown in Fig. 5 described above.

The print server 100 transfers the generated JavaScript program to the client terminal 101 in response to the print request issued by the client terminal 101 (step S003).

The client terminal 101 executes the JavaScript program received from the print server 100, and transfers the JavaScript program execution result to the Web application 302 on the print server 100. The JavaScript program execution result transferred at this time includes, for example, a polling instruction and event register instruction sent to the printer 102, the print request processing, and the ID information transferred from the printer 102 to the client terminal 101.

When the Web application 302 on the print server 100 receives the information transferred from the client terminal 101 (step S004), it determines whether various requests sent to the printer 102 have succeeded (step S005). If the various requests have succeeded (YES in step S005), the print server 100 registers the polling interval time, which is received from the printer 102, in association with a corresponding printer included in the printer list (Fig. 11). Also, the print server 100 sets the current time as the item of the polling reception time in the printer list (Fig. 11) (step S006). Moreover, the print server 100 registers in the print job list (Fig. 12) the printer job ID and event ID, which are received from the printer 102, in association with a corresponding job (step S007). The processing sequence then ends.

If the client terminal 101 notifies the print server 100 that the various requests have failed (NO in step S005), the print server 100 deletes a corresponding job from the print job list (step S008). The print server 100 registers the information of the deleted job in the print history shown in Fig. 13 (step S009), and the processing sequence then ends.

### [Polling Notification Destination Registration Processing]

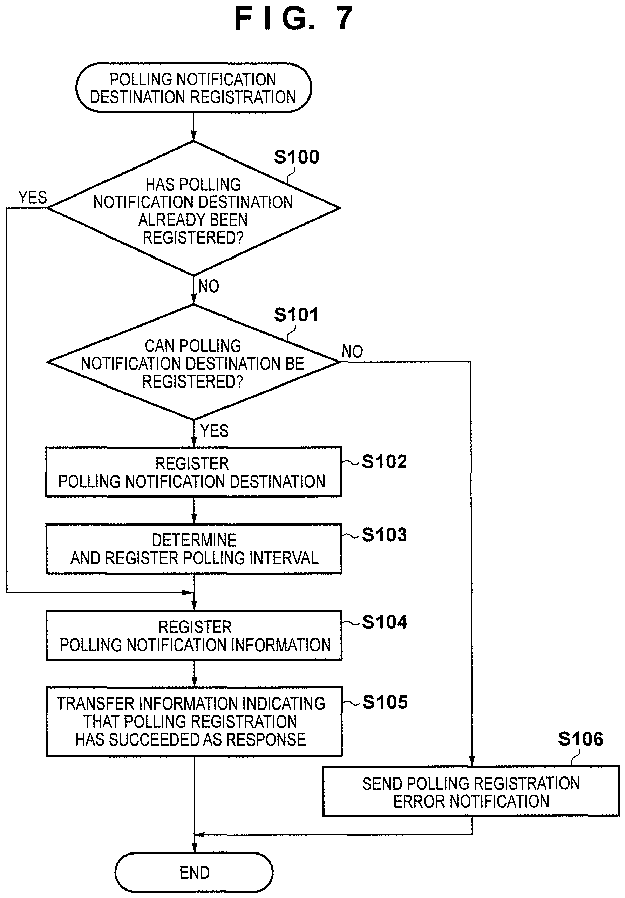

Fig. 7 is a flowchart of processing, which is operated by the CPU 210 in accordance with a program stored in the ROM 212 of the printer 102, when the Web service acceptance unit 410 receives a polling instruction (F102).

When the printer 102 receives a polling instruction as shown in Fig. 14, it determines whether the polling notification destination has already been registered in the polling monitoring list (Fig. 18) (step S100). If the polling notification destination has already been registered in the polling monitoring list (YES in step S100), the printer 102 does not perform polling notification destination registration processing, and the process advances to polling information registration (step S104).

If the polling notification destination has not yet been registered in the polling monitoring list (NO in step S100), the printer 102 confirms whether the polling notification destination can be registered in the polling monitoring list. If the polling notification destination can be registered in the polling monitoring list (YES in step S101), the printer 102 registers the polling notification destination in the polling monitoring list (step S102), and determines and registers the polling interval (step S103). If the polling notification destination cannot be registered in the polling monitoring list because, for example, the number of registered polling notification destinations has already reached an upper limit (NO in step S101), the printer 102 sends a polling registration error notification to the requestor of polling registration (step S106). The processing sequence then ends.

After the printer 102 registers the polling notification destination in the polling monitoring list, it registers polling notification information (step S104). The polling notification information indicates herein the polling notification interval and the time elapsed after the previous polling operation. In this embodiment, when polling transfer is done, the elapsed time is reset to "0" and counted up by the time elapsed after this transfer.

After the printer 102 registers the polling notification information, it transfers information indicating that registration has succeeded as a polling registration response to the polling instruction (step S105). The processing sequence then ends.

### [Polling Processing]

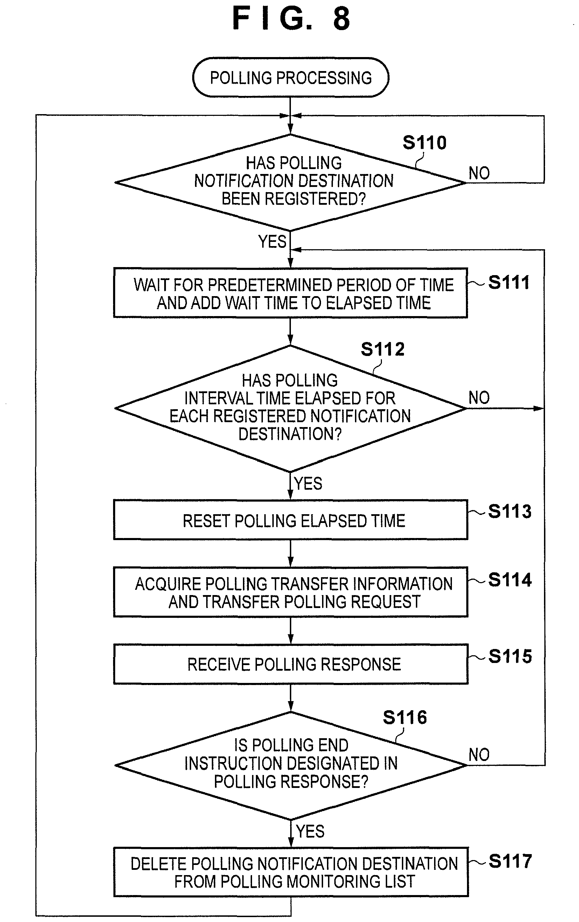

Fig. 8 is a flowchart for explaining polling processing by the job management unit 414 of the pull-print application 304, which is operated by the CPU 210 in accordance with a program stored in the ROM 212 of the printer 102. Fig. 8 corresponds to Fill and F115 in Fig. 5.

The job management unit 414 of the pull-print application 304 installed on the printer 102 confirms whether the polling notification destination has been registered in the polling monitoring list. If the job management unit 414 detects that the polling notification has been registered (YES in step S110), it performs wait processing for a predetermined period of time. The job management unit 414 then adds the wait time to the elapsed time managed in the polling monitoring list (Fig. 18) (step Sill).

The job management unit 414 confirms whether the polling interval time has elapsed from the previous polling notification operation for each registered polling notification destination (step S112). If the elapsed time has not reached the polling interval as a result of confirmation (NO in step S112), the job management unit 414 performs wait processing for a predetermined period of time again (step Sill). If the elapsed time has reached the polling interval as a result of confirmation (YES in step S112), the job management unit 414 resets the elapsed time to "0" (step S113). The job management unit 414 then acquires transfer information designated during the registration of the polling notification destination, and transfers a polling request (Fig. 16) to the notification destination (step S114). The transfer information designated during the registration of the polling notification destination corresponds herein notification details defined in the polling monitoring list (Fig. 18).

The job management unit 414 receives response data (Fig. 17) transferred from the polling notification destination in response to the polling request (step S115). The job management unit 414 determines whether a polling end instruction is designated in the received polling data (step S116). This determination is done based on a value designated in an EndPolling element included in the polling response (Fig. 17), as described above. If a polling end instruction is designated (YES in step S116), the job management unit 414 deletes the information corresponding to the polling notification destination from the polling monitoring list (step S117), and the process returns to step S110. If no polling end instruction is designated (NO in step S116), the process returns to step Sill again, in which the job management unit 414 continues its polling processing.

### [Polling Reception Processing]

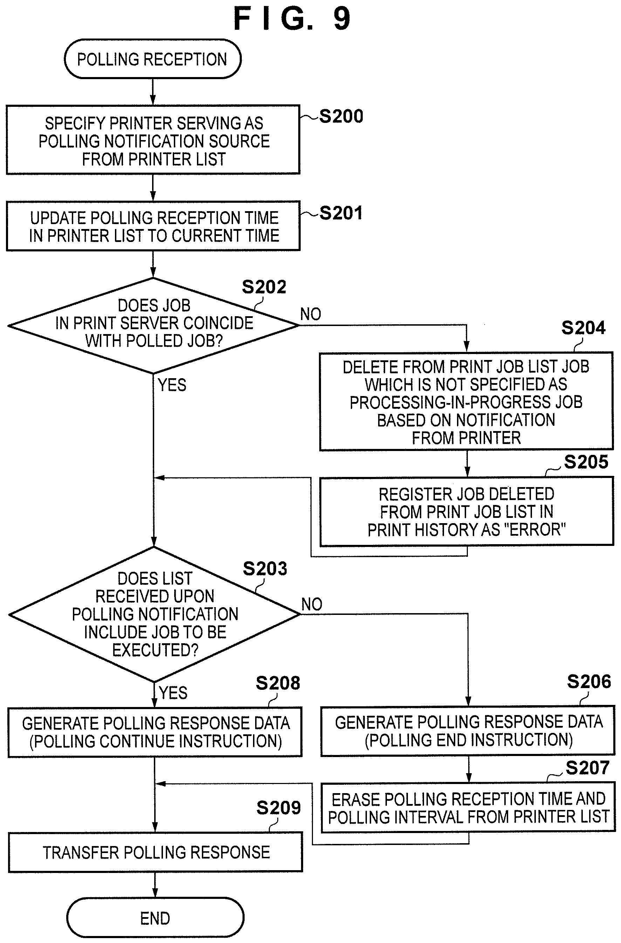

Fig. 9 is a flowchart of processing which is executed by the polling reception processing unit 400 of the Web service 303 and operated by the CPU 202 in accordance with a program stored in the ROM 204 of the print server 100. This processing is executed in response to the polling notification (Fill & F115) from the printer 102 shown in Fig. 5.

When the polling reception processing unit 400 of the Web service 303 installed on the print server 100 receives polling from the printer 102, it specifies from the printer list a printer which has transferred the polling (Fig. 11) (step S200). The polling reception processing unit 400 updates the polling reception time of the corresponding printer to the current time (step S201). At this time, the polling reception time of the corresponding printer is updated to the current time to confirm whether polling transfer is performed exactly at each polling interval time.

The polling reception processing unit 400 confirms the job requested to be executed by the printer which has transferred the polling notification, based on the print job list (Fig. 12), to determine whether the job in this print job list coincides with that in the job list received upon the polling notification (step S202).

If the print job list in the print server 100 does not coincide with that received upon the polling notification (NO in step S202), the information sent from the printer 102 upon the polling notification is preferentially held. More specifically, the polling reception processing unit 400 deletes from the print job list a job which is registered in the print job list managed by the print server 100 but is not specified as a processing-in-progress job upon the polling notification from the printer 102 (step S204). The polling reception processing unit 400 registers this job in the print history (Fig. 13) as a print job having an "Error" print result (step S205).

The polling reception processing unit 400 confirms whether the list received upon the polling notification includes a job to be executed (step S203). If this list includes a job for which the printer 102 continues its polling notification (YES in step S203), the print server 100 continues to monitor the print job by polling. Therefore, the polling reception processing unit 400 generates polling response data (Fig. 17) obtained by setting the polling end instruction (EndPolling element) to "false" (step S208). At this time, by receiving the polling response data, the printer 102 can confirm that polling has normally reached the print server 100.

If the list received upon polling from the printer 102 includes no job to be executed (NO in step S203), the print server 100 no longer needs to perform polling. Therefore, the polling reception processing unit 400 generates polling response data obtained by setting the polling end instruction (EndPolling element) to "true" (step S206). The polling reception processing unit 400 erases the polling reception time and polling interval information from the printer list (Fig. 11) (step S207). The polling reception processing unit 400 transfers the generated polling response data to the printer 102 (step S209).

### [Polling Monitoring Processing]

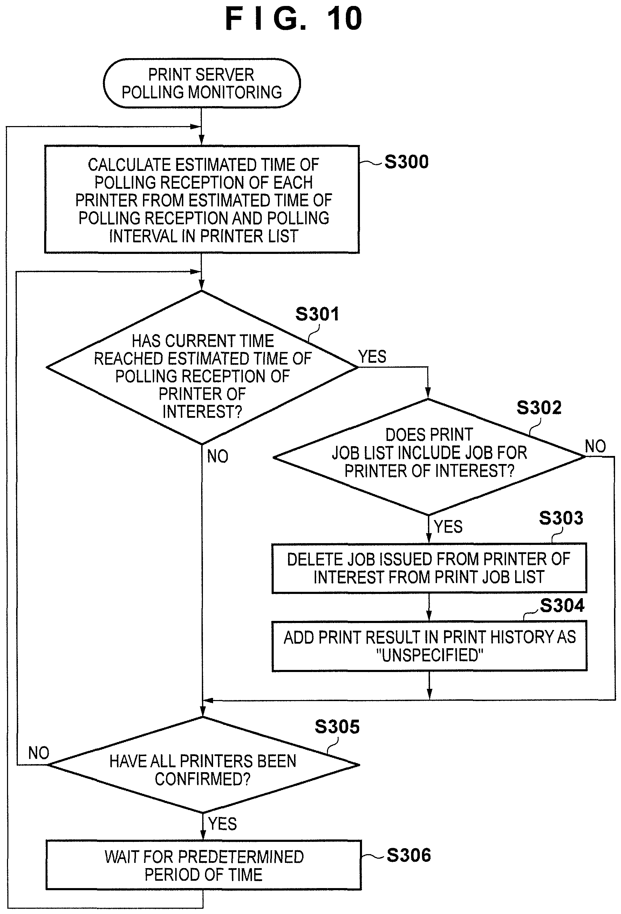

Fig. 10 is a flowchart of printer polling monitoring which is executed by the printer information management unit 403 of the printer management service 306 and operated by the CPU 202 in accordance with a program stored in the ROM 204 of the print server 100. This processing is executed in continuously monitoring a polling notification after information is received from a printer in F108 in Fig. 5.

In polling monitoring, printers which are periodically registered in the printer list (Fig. 11) and are being polled are periodically monitored to determine whether they periodically transfer polling notifications. If the polling notification transferred from any of these printers is stopped, a printing-in-progress job for the printer which has stopped it is ended.

For all printers registered in the printer list (Fig. 11), the printer information management unit 403 adds the polling interval time to the poling reception time of a printer being polled, thereby calculating the estimated time of polling (step S300).

The printer information management unit 403 compares the calculated, estimated time of polling reception with the current time of the print server 100 for each printer registered in the printer list (step S301). If it is determined as a result of a comparison in step S301 that the estimated time of polling reception has not reached the current time (NO in step S301), the printer information management unit 403 performs no special processing. The printer information management unit 403 determines whether the times are confirmed for all printers (step S305). If a printer to be confirmed remains (NO in step S305), the process returns to step S301, in which the printer information management unit 403 confirms the time for the printer to be confirmed.

If it is determined as a result of a comparison in step S301 that the estimated time of polling of the printer of interest has reached the current time (YES in step S301), the printer information management unit 403 confirms whether the print job list (Fig. 11) includes a print job for the printer of interest (step S302). If the print job list includes the print job for the printer of interest (YES in step S302), the printer information management unit 403 deletes from the print job list the print job issued to the printer of interest (step S303). The printer information management unit 403 then registers the deleted print job in the print history (Fig. 13) in association with an "Unspecified" print result (step S304).

If the print job list includes no print job for the printer of interest (NO in step S302), the process advances to step S305. If the times have been confirmed for all printers in step S305 (YES in step S305), the printer information management unit 403 performs wait processing for a predetermined period of time (step S306). When the printer information management unit 403 returns from the wait processing, the process returns to step S300, in which it performs
processing of calculating the estimated time of polling reception of each printer registered in the printer list again.

Although the printer receives a response to a polling notification from the print server in step S115 of Fig. 8, it may transfer polling notifications a predetermined number of times again if the printer cannot receive the response due to unexpected problems. Also, if the printer cannot receive a polling response even when it transfers polling notifications a plurality of times, a polling notification to be transferred to the notification destination may be ended. In this case, the printer deletes the corresponding notification destination from the polling monitoring list shown in Fig. 18.

Also, if the print server cannot receive a polling notification at the estimated time of polling reception in step S301 of Fig. 10, it deletes the print job from the print job list based on the result of only one-time determination, but the present invention is not limited to this. For example, the print server may delete the job when it continues to monitor a printer from which it cannot receive a polling notification at the estimated time of polling reception, but nonetheless cannot receive a polling notification within a predetermined time (for example, the next estimated time of polling reception). Moreover, the print server may delete the print job from the print job list when it counts the number of failures of reception of polling notifications, and cannot receive a polling notification over a predetermined number of times (predetermined interval).

Note that when the print server receives a polling notification from a printer after it deletes a print job for the printer from the list in step S303, it may ignore the polling notification. Alternatively, if the print server receives a polling notification for a print job which is not registered in the print job list, it may set this print job as an error and add information to that effect in the print history (Fig. 13) so as to update this print history.

Upon the above-mentioned operation, even if the print server becomes incapable of monitoring the processing status of a requested print job, it can be prevented from wastefully continuing monitoring, thereby synchronizing it with the printer in terms of the management status of the print job.

### [Registered Event Deletion Processing]

A means for solving the problem associated with printing of the pull-print scheme which uses JavaScript according to this embodiment will be described next. Event deletion processing for reliably deleting an event registered in response to an event notification (a print job end notification in this embodiment) registered in a printer will be described herein. In F104 of Fig. 5, the client terminal 101 instructs the printer 102 to register an event, in accordance with a JavaScript program. Note that the printer 102 continues its event notification unless the print server 100 instructs the printer 102 to delete the event. This indicates that the printer 102 continues to hold the event for sending the end notification registered in F104. However, when, for example, the Web browser 301 on the client terminal 101 is closed, the print server 100 cannot transfer an event end instruction to the printer 102 via the client terminal 101. As a result, the print server 100 cannot delete the event registered at the printer 102 and therefore continues to transfer a print job end notification.

Processing for solving the above-mentioned problem will be described with reference to Fig. 19. Fig. 19 is a flowchart of processing operated by the CPU 202 in accordance with a program stored in the ROM 204 of the print server 100 when the print event reception unit 408 of the Web service 303 installed on the print server 100 receives an event. This processing is executed when a job end notification (F113) shown in Fig. 5 is received.

The print event reception unit 408 receives a job end event notification from the printer 102 (step S400). The print event reception unit 408 deletes a print job specified in the job end event notification from the print job list (Fig. 12), and registers the print job in the print history (Fig. 13) (step S401). The print event reception unit 408 confirms whether another job for the printer which has transferred the job end event notification is present in the print job list (Fig. 12) (step S402). If it is determined as a result of confirmation in step S402 that another job for the printer which has transferred the job end event notification is present (YES in step S402), the print event reception unit 408 transfers an event reception response to the printer 102 (S404). If it is determined as a result of confirmation in step S402 that another job for the printer which has transferred the job end event notification is absent (NO in step S402), the print event reception unit 408 transfers a response (event end response) including an event end instruction to the printer 102 (step S403).

A general event notification protocol (for example, Web Services Eventing (WE-Eventing)) has no mechanism in which an event notification is ended in the process of making a response to the event notification. In such a case, an event reception error, for example, can be used as a response to end an event notification. When the print server is to end an event notification for an event, it sends an event reception error as a response, so that an apparatus which has transferred the event and is capable of implementing techniques described in Japanese Patent Laid-Open No. 2007-257481 can delete the event. Note that an HTTP error status code ("404"), for example, may also be used as the event reception error.

Upon the above-mentioned operation, the printer can be prevented from wastefully continuing execution of a registered event.

Again, upon the above-mentioned operation, in a pull-print system under the environment in which a print server cannot directly communicate with a printer, a mismatch between the print server and the printer in terms of managing, for example, a print job can be prevented to, in turn, prevent wasteful management and processing.

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A pull-print system including a client (101) and a printer (102) which are located on an internal network (105), and a server (100) located on an external network (104), characterized in that the server (100) comprises the steps of: generating, in response to a print request issued from the client (101) to the printer (102), a program to be executed by the client (101) to implement an instruction issued to the printer (102) to execute processing for a print job and a notification which is associated with a processing status of the print job and is to be sent to the server (100), and transferring the program to the client (101); receiving the notification from the printer (102); and monitoring the print job, instructed to be executed by the printer (102), using the notification received.

## Claims

1. A print server (100) in a pull-print system including a client terminal (101) and a printer (102) which are located on an internal network (105), and the print server (100) located on an external network (100), **characterized by** comprising:
generation means (405) for generating, in response to a print request issued from the client terminal (101) to the printer (102), a program in a script language, which is to be executed by the client terminal (101) to implement a print instruction issued to the printer to execute processing for a print job and to issue a polling instruction to the printer to execute processing for a polling notification comprising a processing-in-progress job list of active print jobs being printed by the printer, which polling notification is associated with a processing status of the print job and is to be periodically transferred to the print server (100) with a designated polling interval, and transferring the program to the client terminal (101);
reception means (400) for receiving the polling notification from the printer (102); and
monitoring means (402, 403) for monitoring the print job, instructed to be executed by the printer (102), using the polling notification received by said reception means (400),
wherein said monitoring means (402, 403) is adapted to end the monitoring of the print job instructed to be processed by the printer (102), when a next polling notification is not received from the printer (102) within the designated polling interval after a previous polling notification is received from the printer (102).

2. A pull-print system including a client terminal (101) and a printer (102) which are located on an internal network (105), and a print server (100) located on an external network (104), wherein
the print server (100) is a print server according to claim 1, and
the printer (102) comprises:
acceptance means (410) for accepting the print instruction to execute the processing for the print job and the polling instruction to execute the processing for the polling notification, which is done by executing the program in the script language by the client terminal (101); and
notification means (411) for periodically transferring the polling notification to a designated destination of the print server with the designated polling interval.

3. The system according to claim 2, wherein
the program in the script language further includes an instruction to transfer an end notification of the print job to the printer when the processing of the print job ends, and
in response to the instruction to transfer the end notification, said notification means of the printer is adapted to transfer an end notification to the print server when the processing of the print job ends.

4. The system according to claim 3, wherein, when said reception means receives the end notification from said notification means of the printer, said reception means is adapted to determine whether another print job instructed to be printed by the printer is present, and to include in a response to the end notification an instruction to end the polling notification associated with the processing status of the print job if the other print job is absent.

5. The system according to claim 4, wherein, when said notification means accepts the instruction to end the polling notification associated with the processing status of the print job from the print server, said notification means is adapted to end the polling notification transferred to the print server.

6. The system according to any one of claims 1 to 5, wherein said monitoring means is adapted to end monitoring of a print job, which is not specified as a processing-in-progress job in the polling notification transferred from the printer, among monitored print jobs.

7. The system according to any one of claims 1 to 6, characterized wherein said notification means is adapted to transfer the polling notification associated with the processing status of the print job at the polling interval which is designated by the printer.

8. The system according to any one of claims 1 to 7, wherein the program in the script language is written in JavaScript executed on a Web browser installed on the client terminal.

9. The system according to any one of claims 1 to 8, wherein said monitoring means is adapted to hold history information of a print job, monitoring of which is ended, and to include the processing status of the print job at the end of monitoring of the print job in the history information.

10. A control method for a print server in a pull-print system including a client terminal (101) and a printer (102) which are located on an internal network (105), and the print server (100) located on an external network (104), **characterized by** comprising:
a generation step (S002, S003) of generating, in response to a print request issued from the client terminal (101) to the printer (102), a program in a script language, which is to be executed by the client terminal (101) to implement a print instruction issued to the printer (102) to execute processing for a print job and to issue a polling instruction to the printer to execute processing for a polling notification comprising a processing-in-progress job list of active print jobs being printed by the printer, which polling notification is associated with a processing status of the print job and is to be periodically transferred to the print server (100) with a designated polling interval, and transferring the program to the client terminal (101);
a reception step (S004) of receiving the polling notification from the printer (102); and
a monitoring step of monitoring the print job, instructed to be executed by the printer (102), using the polling notification received in the reception step,
wherein, in the monitoring step, the monitoring of the print job instructed to be processed by the printer (102) is ended when a next polling notification is not received from the printer (102) within the designated polling interval after a previous polling notification is received from the printer (102).

11. A print job management method in a pull-print system including a client terminal (101) and a printer (102) which are located on an internal network (105), and a print server (100) located on an external network (104), comprising:
in the print server (100), the method according to claim 10, and
in the printer (102), a method comprising:
an acceptance step (F101) of accepting the print instruction to execute the processing for the print job and the polling instruction to execute the processing for the polling notification, which is done by executing the program in the script language by the client terminal (101); and
a notification step (F111) of periodically transferring the polling notification to a designated destination of the print server (100) with the designated polling interval.

12. A program for causing a computer to function as a print server according to claim 1.

## Patentansprüche

1. Druckserver (100) in einem Pull-Print-System umfassend ein Clientterminal (101) und einen Drucker (102), die in einem internen Netzwerk (105) lokalisiert sind, und den Druckserver (100), der in einem externen Netzwerk (100) lokalisiert ist, **gekennzeichnet durch**:
eine Erzeugungseinrichtung (405) zum Erzeugen, in Erwiderung auf eine Druckanforderung, die von dem Clientterminal (101) an den Drucker (102) abgegeben wird, eines Programms in einer Skriptsprache, das durch das Clientterminal (101) auszuführen ist zum Implementieren einer an den Drucker abgegebenen Druckanweisung, um eine Verarbeitung für einen Druckauftrag auszuführen, und zum Abgeben einer Abfrageanweisung an den Drucker, um eine Verarbeitung für eine Abfragebenachrichtigung auszuführen, die eine Verarbeitung-im-Gang-Auftragsliste von durch den Drucker gedruckten aktiven Druckaufträgen aufweist, wobei die Abfragebenachrichtigung mit einem Verarbeitungsstatus des Druckauftrags in Zusammenhang steht und mit einem bezeichneten Abfrageintervall periodisch an den Druckserver (100) zu übermitteln ist, und Übermitteln des Programms an das Clientterminal (101);
eine Empfangseinrichtung (400) zum Empfangen der Abfragebenachrichtigung von dem Drucker (102); und
eine Überwachungseinrichtung (402, 403) zum Überwachen des Druckauftrags, für den angewiesen ist, dass er durch den Drucker (102) auszuführen ist, unter Verwendung der durch die Empfangseinrichtung (400) empfangenen Abfragebenachrichtigung,
wobei die Überwachungseinrichtung (402, 403) eingerichtet ist zum Beenden der Überwachung des Druckauftrags, für den angewiesen ist, dass er durch den Drucker (102) zu verarbeiten ist, wenn eine nächste Abfragebenachrichtigung von dem Drucker (102) nicht innerhalb des bezeichneten Abfrageintervalls empfangen wird, nachdem eine vorhergehende Abfragebenachrichtigung von dem Drucker (102) empfangen ist.

2. Pull-Print-System umfassend ein Clientterminal (101) und einen Drucker (102), die in einem internen Netzwerk (105) lokalisiert sind, und einen Druckserver (100), der in einem externen Netzwerk (104) lokalisiert ist, wobei
der Druckserver (100) ein Druckserver gemäß Anspruch 1 ist, und
der Drucker (102) aufweist:
eine Annahmeeinrichtung (410) zum Annehmen der Druckanweisung, um die Verarbeitung für den Druckauftrag auszuführen, und der Abfrageanweisung, um die Verarbeitung für die Abfragebenachrichtigung auszuführen, was durch Ausführung des Programms in der Skriptsprache durch das Clientterminal (101) erfolgt; und
eine Benachrichtigungseinrichtung (411) zum periodischen Übermitteln der Abfragebenachrichtigung an ein bezeichnetes Ziel des Druckservers mit dem bezeichneten Abfrageintervall.

3. System gemäß Anspruch 2, wobei
das Programm in der Skriptsprache zusätzlich eine Anweisung zum Übermitteln einer Endebenachrichtigung des Druckauftrags an den Drucker, wenn die Verarbeitung des Druckauftrags endet, umfasst, und
die Benachrichtigungseinrichtung des Druckers eingerichtet ist zum Übermitteln einer Endebenachrichtigung an den Druckserver, wenn die Verarbeitung des Druckauftrags endet, in Erwiderung auf die Anweisung zum Übermitteln der Endebenachrichtigung.

4. System gemäß Anspruch 3, wobei, wenn die Empfangseinrichtung die Endebenachrichtigung von der Benachrichtigungseinrichtung des Druckers empfängt, die Empfangseinrichtung eingerichtet ist zum Bestimmen, ob ein anderer Druckauftrag vorhanden ist, für den angewiesen ist, dass er durch den Drucker zu drucken ist, und Einfügen einer Anweisung zum Beenden der Abfragebenachrichtigung, die mit dem Verarbeitungsstatus des Druck-auftrags in Zusammenhang steht, falls der andere Druckauftrag nicht vorhanden ist, in eine Antwort auf die Endebenachrichtigung.

5. System gemäß Anspruch 4, wobei, wenn die Benachrichtigungseinrichtung die Anweisung zum Beenden der Abfragebenachrichtigung, die mit dem Verarbeitungsstatus des Druckauftrags in Zusammenhang steht, von dem Druckserver annimmt, die Benachrichtigungseinrichtung eingerichtet ist zum Beenden der Abfragebenachrichtigung, die an den Druckserver übermittelt wird.

6. System gemäß einem der Ansprüche 1 bis 5, wobei die Überwachungseinrichtung eingerichtet ist zum Beenden einer Überwachung eines Druckauftrags, der in der von dem Drucker übermittelten Abfragebenachrichtigung nicht als ein Verarbeitung-im-Gang-Auftrag spezifiziert ist, unter überwachten Druckaufträgen.

7. System gemäß einem der Ansprüche 1 bis 6, **dadurch gekennzeichnet, dass** die Benachrichtigungseinrichtung eingerichtet ist zum Übermitteln der Abfragebenachrichtigung, die mit dem Verarbeitungsstatus des Druckauftrags in Zusammenhang steht, in dem Abfrageintervall, das durch den Drucker bezeichnet wird.

8. System gemäß einem der Ansprüche 1 bis 7, wobei das Programm in der Skriptsprache in JavaScript geschrieben ist, was auf einem auf dem Clientterminal installierten Webbrowser ausgeführt wird.

9. System gemäß einem der Ansprüche 1 bis 8, wobei die Überwachungseinrichtung eingerichtet ist zum Halten von Historieninformationen eines Druckauftrags, dessen Überwachung beendet ist, und Einfügen des Verarbeitungsstatus des Druckauftrags am Ende einer Überwachung des Druckauftrags in die Historieninformationen.

10. Steuerverfahren für einen Druckserver in einem Pull-Print-System umfassend ein Clientterminal (101) und einen Drucker (102), die in einem internen Netzwerk (105) lokalisiert sind, und den Druckserver (100), der in einem externen Netzwerk (104) lokalisiert ist, **gekennzeichnet durch**:
einen Erzeugungsschritt (S002, S003) des Erzeugens, in Erwiderung auf eine Druckanforderung, die von dem Clientterminal (101) an den Drucker (102) abgegeben wird, eines Programms in einer Skriptsprache, das durch das Clientterminal (101) auszuführen ist zum Implementieren einer an den Drucker (102) abgegebenen Druckanweisung, um eine Verarbeitung für einen Druckauftrag auszuführen, und zum Abgeben einer Abfrageanweisung an den Drucker, um eine Verarbeitung für eine Abfragebenachrichtigung auszuführen, die eine Verarbeitung-im-Gang-Auftragsliste von durch den Drucker gedruckten aktiven Druckaufträgen aufweist, wobei die Abfragebenachrichtigung mit einem Verarbeitungsstatus des Druckauftrags in Zusammenhang steht und mit einem bezeichneten Abfrageintervall periodisch an den Druckserver (100) zu übermitteln ist, und des Übertragens des Programms an das Clientterminal (101);
einen Empfangsschritt (S004) des Empfangens der Abfragebenachrichtigung von dem Drucker (102); und
einen Überwachungsschritt des Überwachens des Druckauftrags, für den angewiesen ist, dass er durch den Drucker (102) auszuführen ist, unter Verwendung der in dem Empfangsschritt empfangenen Abfragebenachrichtigung,
wobei in dem Überwachungsschritt die Überwachung des Druckauftrags, für den angewiesen ist, dass er durch den Drucker (102) zu verarbeiten ist, beendet wird, wenn eine nächste Abfragebenachrichtigung von dem Drucker (102) nicht innerhalb des bezeichneten Abfrageintervalls empfangen wird, nachdem eine vorhergehende Abfragebenachrichtigung von dem Drucker (102) empfangen ist.

11. Druckauftragsverwaltungsverfahren in einem Pull-Print-System umfassend ein Clientterminal (101) und einen Drucker (102), die in einem internen Netzwerk (105) lokalisiert sind, und einen Druckserver (100), der in einem externen Netzwerk (104) lokalisiert ist, mit:
dem Verfahren gemäß Anspruch 10 in dem Druckserver (100), und
einem Verfahren in dem Drucker (102), das aufweist:
einen Annahmeschritt (F101) des Annehmens der Druckanweisung, um die Verarbeitung für den Druckauftrag auszuführen, und der Abfrageanweisung, um die Verarbeitung für die Abfragebenachrichtigung auszuführen, was durch Ausführung des Programms in der Skriptsprache durch das Clientterminal (101) erfolgt; und
einen Benachrichtigungsschritt (F111) des periodischen Übermittelns der Abfragebenachrichtigung an ein bezeichnetes Ziel des Druckservers (100) mit dem bezeichneten Abfrageintervall.

12. Programm zum Veranlassen eines Computers zum Funktionieren als ein Druckserver gemäß Anspruch 1.

## Revendications

1. Serveur d'impression (100) dans un système d'impression tirée comprenant un terminal client (101) et une imprimante (102) qui sont situés sur un réseau interne (105), et le serveur d'impression (100) situé sur un réseau externe (100), **caractérisé en ce qu'**il comprend :
un moyen de production (405) pour produire, en réponse à une demande d'impression émise depuis le terminal client (101) vers l'imprimante (102), un programme dans un langage script, qui doit être exécuté par le terminal client (101) pour mettre en oeuvre une instruction d'impression délivrée à l'imprimante afin d'exécuter un traitement pour une tâche d'impression et de présenter une invitation à émettre à l'imprimante de manière à exécuter le traitement pour une notification d'invitation à émettre comprenant une liste de tâches en cours de traitement concernant des tâches d'impression active étant imprimées par l'imprimante, laquelle notification d'invitation à émettre est associée à un état de traitement de la tâche d'impression et doit être transférée périodiquement au serveur d'impression (100) avec un intervalle d'invitation à émettre désigné, et transférer le programme au terminal client (101) ;
un moyen de réception (400) pour recevoir la notification d'invitation à émettre de l'imprimante (102) ; et
un moyen de contrôle (402, 403) pour surveiller le déroulement de la tâche d'impression, ayant été ordonnée pour exécution par l'imprimante (102), par utilisation de la notification d'invitation à émettre reçue par ledit moyen de réception (400),
ledit moyen de contrôle (402, 403) est apte à mettre fin à la surveillance du déroulement de la tâche d'impression ayant été ordonnée pour traitement par l'imprimante (102), lorsqu'une notification d'invitation à émettre suivante n'est pas reçue de l'imprimante (102) dans les limites de l'intervalle d'invitation à émettre désigné une fois reçue de l'imprimante (102) une notification d'invitation à émettre précédente.

2. Système d'impression tirée comprenant un terminal client (101) et une imprimante (102) qui sont situés sur un réseau interne (105), et un serveur d'impression (100) situé sur un réseau externe (104), dans lequel
le serveur d'impression (100) est un serveur d'impression selon la revendication 1, et
l'imprimante (102) comprend :
un moyen d'acceptation (410) pour accepter l'instruction d'impression afin d'exécuter le traitement pour la tâche d'impression et l'instruction d'invitation à émettre afin d'exécuter le traitement pour la notification d'invitation à émettre, ce qui est réalisé par exécution du programme dans le langage script par le terminal client (101) ; et
un moyen de notification (411) pour transférer périodiquement la notification d'invitation à émettre à une destination désignée du serveur d'impression avec l'intervalle d'invitation à émettre désigné.

3. Système selon la revendication 2, dans lequel
le programme dans le langage script comprend, en outre, une instruction de transfert d'une notification finale de la tâche d'impression à l'imprimante lorsque le traitement de la tâche d'impression se termine, et
en réponse à l'instruction de transfert de la notification finale, ledit moyen de notification de l'imprimante est apte à transférer une notification finale au serveur d'impression lorsque le traitement de la tâche d'impression se termine.

4. Système selon la revendication 3, dans lequel, lorsque ledit moyen de réception reçoit la notification de fin dudit moyen de notification de l'imprimante, ledit moyen de réception est apte à déterminer si une autre tâche d'impression ayant été ordonnée pour être imprimée par l'imprimante est présente, et inclure, dans une réponse à la notification finale, une instruction pour mettre fin à la notification d'invitation à émettre associée à l'état de traitement de la tâche d'impression si l'autre tâche d'impression est absente.

5. Système selon la revendication 4, dans lequel, lorsque ledit moyen de notification accepte l'instruction pour mettre fin à la notification d'invitation à émettre associée à l'état de traitement de la tâche d'impression à partir du serveur d'impression, ledit moyen de notification est apte à mettre fin à la notification d'invitation à émettre transférée au serveur d'impression.

6. Système selon l'une quelconque des revendications 1 à 5, dans lequel ledit moyen de contrôle est apte à mettre fin à la surveillance du déroulement d'une tâche d'impression, qui n'est pas spécifiée en tant que tâche en cours de traitement dans la notification d'invitation à émettre transférée depuis l'imprimante, parmi des tâches d'impression contrôlées.

7. Système selon l'une quelconque des revendications 1 à 6, **caractérisé en ce que** ledit moyen de notification est apte à transférer la notification d'invitation à émettre associée à l'état de traitement de la tâche d'impression à l'intervalle d'invitation à émettre qui est désigné par l'imprimante.

8. Système selon l'une quelconque des revendications 1 à 7, dans lequel le programme dans le langage script est écrit en JavaScript exécuté sur un navigateur Internet installé sur le terminal client.

9. Système selon l'une quelconque des revendications 1 à 8, dans lequel ledit moyen de contrôle est apte à contenir l'historique d'une tâche d'impression, dont le contrôle est terminé, et à inclure l'état de traitement de la tâche d'impression à la fin du contrôle de la tâche d'impression dans l'historique.

10. Procédé de commande pour un serveur d'impression dans un système d'impression tirée comprenant un terminal client (101) et une imprimante (102) qui sont situés sur un réseau interne (105), et le serveur d'impression (100) situé sur un réseau externe (104), **caractérisé en ce qu'**il comprend :
une étape de production (S002, S003) pour produire, en réponse à une demande d'impression émise depuis le terminal client (101) vers l'imprimante (102), un programme dans un langage script, qui doit être exécuté par le terminal client (101) pour mettre en oeuvre une instruction d'impression délivrée à l'imprimante (102) afin d'exécuter un traitement pour une tâche d'impression et de présenter une invitation à émettre à l'imprimante de manière à exécuter le traitement pour une notification d'invitation à émettre comprenant une liste de tâches en cours de traitement concernant des tâches d'impression actives étant imprimées par l'imprimante, laquelle notification d'invitation à émettre est associée à un état de traitement de la tâche d'impression et doit être transférée périodiquement au serveur d'impression (100) avec un intervalle d'invitation à émettre désigné, et transférer le programme au terminal client (101) ;
une étape de réception (S004) pour recevoir la notification d'invitation à émettre de l'imprimante (102) ; et
une étape de contrôle pour surveiller le déroulement de la tâche d'impression, ayant été ordonnée pour exécution par l'imprimante (102), par utilisation de la notification d'invitation à émettre reçue à l'étape de réception,
où, à l'étape de contrôle, le contrôle du déroulement de la tâche d'impression ayant été ordonnée pour traitement par l'imprimante (102) est terminé lorsqu'une notification d'invitation à émettre suivante n'est pas reçue de l'imprimante (102) dans les limites de l'intervalle d'invitation à émettre une fois reçue de l'imprimante (102) une notification d'invitation à émettre précédente.

11. Procédé de gestion de tâche d'impression dans un système d'impression tirée comprenant un terminal client (101) et une imprimante (102) qui sont situés sur un réseau interne (105), et un serveur d'impression (100) situé sur un réseau externe (104), comprenant :
dans le serveur d'impression (100), le procédé selon la revendication 10, et
dans l'imprimante (102), un procédé comprenant :
une étape d'acceptation (F101) pour accepter l'instruction d'impression afin d'exécuter le traitement pour la tâche d'impression et l'instruction d'invitation à émettre afin d'exécuter le traitement pour la notification d'invitation à émettre, ce qui est réalisé par exécution du programme dans le langage script par le terminal client (101) ; et
une étape de notification (F111) pour transférer périodiquement la notification d'invitation à émettre à une destination désignée du serveur d'impression (100) avec l'intervalle d'invitation à émettre désigné.

12. Programme pour amener un ordinateur à fonctionner comme un serveur d'impression selon la revendication 1.
